# FASCICULE DE BREVET EUROPEEN

(11) **EP 2 300 141 B1**
(45) Date de publication et mention de la délivrance du brevet: **01.08.2012**
(21) Numéro de dépôt: 09757857.9
(22) Date de dépôt: 02.06.2009
(51) Int. Cl.: B01J 8/02

(54) **SYSTEME DE RETENTION EXTERNE D'UN LIT DE CATALYSEUR DANS UN REACTEUR A FLUX RADIAL**
SYSTEM ZUM EXTERNEN HALTEN EINER KATALYSATORSCHÜTTUNG IN EINEM RADIALSTROMREAKTOR
SYSTEM FOR EXTERNALLY HOLDING A CATALYST BED IN A RADIAL FLOW REACTOR

(30) Priorité: 02.06.2008 FR 0803007
(43) Date de publication de la demande: 30.03.2011
(73) Titulaire: EUROSLOT KDSS France, 86140 Scorbe Clairvaux (FR)
(72) Inventeur: NADERI, Abdol Hossein, 86000 Poitiers (FR)
(74) Mandataire: Thibon-Littaye, Annick
(86) Numéro de dépôt international: PCT/IB2009/005819
(87) Numéro de publication internationale: WO 2009/147503

(56) Documents cités:
- EP-A- 0 483 975
- WO-A-01/66239
- US-B1- 6 224 838

## Description

La présente invention concerne la conception et la réalisation d'un système de rétention externe d'un lit de catalyseur dans un réacteur catalytique à flux radial, sous forme d'éléments de conduit externes creux distincts.

Le système selon l'invention est plus particulièrement destiné à être utilisé pour les réacteurs mettant en oeuvre les procédés catalytiques de conversion d'hydrocarbures, dans le domaine pétrolier, notamment pour le reformage ou le craquage d'hydrocarbures.

Les réacteurs catalytiques à flux radial utilisés de façon classique comprennent un lit de particules solides de catalyseur, à l'intérieur d'une cuve cylindrique. L'espace contenant le lit de catalyseur est délimité extérieurement par un conduit d'alimentation filtrant formant une couronne périphérique parallèle à l'axe du réacteur, et intérieurement par un collecteur central également filtrant, placé dans l'axe du réacteur. En fond de réacteur, le conduit d'alimentation externe est supporté par un anneau circulaire. Le lit de particules de catalyseur situé entre le conduit externe et le collecteur central peut être fixe ou il peut être circulant et entraîné dans un mouvement continu.

Le conduit externe est relié à des moyens d'entrée de fluide dans le réacteur. Il canalise ce fluide verticalement le long de la paroi du réacteur et assure sa diffusion dans la direction radiale dans le lit de catalyseur. Après avoir traversé le lit de catalyseur, le fluide issu de la réaction catalytique parvient au collecteur central, d'où il est dirigé vers la sortie du réacteur.

De tels réacteurs fonctionnent à des températures élevées, de l'ordre de 550 °C, et ils sont soumis à des variations de températures importantes et parfois brutales.

On trouve dans les réacteurs existants deux types de systèmes de rétention externe du lit de catalyseur, sous forme de conduit périphérique externe.

Ces systèmes peuvent se présenter sous forme d'un unique panier cylindrique monobloc. Celui-ci offre l'avantage d'une surface de contact avec le catalyseur lisse et uniforme, mais il résiste mal aux fortes élévations de température et à la forte pression exercée sur lui par le fluide dans le réacteur. Il est en outre difficile à réparer en cas de détérioration.

Pour remédier à cet inconvénient, il a été proposé de présenter le conduit sous forme d'éléments longitudinaux tubulaires distincts, qui se disposent rangés les uns à côté des autres en périphérie du réacteur, chacun couvrant un secteur annulaire. Un réacteur comportant de tels éléments de conduit est notamment décrit dans le document WO 01/66239. On y observe que les différents éléments de conduit présentent en section une forme semi-ovale ou trapézoïdale, de sorte qu'ils soient mobiles radialement lors de la construction du réacteur.

Un tel système cellulaire offre l'avantage d'une grande facilité de réparation, puisqu'il suffit de remplacer uniquement l'élément endommagé. Il présente par contre plusieurs inconvénients, notamment le fait que la surface de contact avec le catalyseur est irrégulière. La présence de zones mortes entre les éléments adjacents est particulièrement nocive car ces zones sont le siège de dilatations thermiques supplémentaires et le catalyseur a tendance à y brûler et à s'y détériorer lors d'un fonctionnement à des températures élevées. Il en résulte un moindre rendement catalytique et une attaque destructrice pour les éléments métalliques.

Pour faire obstacle entre les éléments de conduit adjacents, il a été prévu dans l'art antérieur de souder une plaque d'étanchéité à l'intersection des éléments, au niveau de leur surface interne. Ces plaques, qui sont constituées en matière métallique, tout comme les éléments de conduit, présentent une faible résistance mécanique, et il est fréquent, lors du fonctionnement du réacteur à des températures élevées, qu'elles se déplacent et ouvrent l'accès aux zones mortes. Un autre inconvénient du système de l'art antérieur, qui est également lié à la forme des éléments de conduit et au mode de construction de l'ensemble de l'enveloppe externe du lit catalytique, réside dans le fait que les éléments de conduit doivent être maintenus en périphérie du réacteur par des anneaux de maintien disposés à intervalles réguliers sur toute leur hauteur. Ces anneaux créent des perturbations de la circulation de catalyseur dans leur espace de rétention. Pour toutes ces raisons, le fonctionnement du réacteur est souvent peu satisfaisant.

La présente invention vise à remédier aux inconvénients des systèmes de rétention externe du catalyseur dans les réacteurs catalytiques existant, notamment à ceux présentés ci-avant, en proposant un système cellulaire, c'est-à-dire composé d'éléments de conduit creux distincts, qui allie une bonne facilité de montage et de réparation à une capacité de fonctionnement améliorée, notamment par une surface de contact avec le catalyseur uniforme sur toute la périphérie du réacteur, une bonne étanchéité au catalyseur à la jonction entre les éléments adjacents afin d'empêcher le catalyseur de pénétrer dans les zones mortes entre ces éléments, et une bonne résistance mécanique, en particulier sous exposition aux variations brusques et aux fortes élévations de température. L'invention vise également à assurer une bonne circulation du catalyseur dans l'espace annulaire situé entre les éléments de conduit externes et le collecteur central, et une distribution de fluide uniforme dans le lit de catalyseur. Le système selon l'invention est également conçu pour présenter un coût de fabrication et de maintenance peu élevé.

A cet effet, l'invention propose un système de rétention externe d'un lit de catalyseur dans un réacteur catalytique à flux radial, qui comporte une pluralité d'éléments de conduit creux longitudinaux régulièrement répartis en couronne périphérique autour d'un espace central contenant le lit de catalyseur et présentant une paroi avant filtrante à l'égard du catalyseur, pour l'admission radiale d'un fluide à traiter dans le lit de catalyseur. Chacun des éléments de conduit est limité latéralement par deux parois latérales qui s'orientent radialement dans le réacteur et qui comportent des moyens d'assemblage, du type à organe mâle dans organe femelle, avec les éléments respectivement adjacents.

Le réacteur catalytique dans lequel est utilisé le système selon l'invention comporte de façon classique un espace contenant le lit radial de particules solides de catalyseur, délimité extérieurement par les éléments de conduit creux disposés parallèlement à l'axe du réacteur, en appui contre sa paroi interne, de manière à former une couronne périphérique externe, des moyens d'entrée de fluide raccordés aux éléments de conduit, lesquels alimentent radialement le lit de particules, et un collecteur central filtrant disposé selon l'axe du réacteur, recevant le fluide depuis le lit radial et raccordé à des moyens de sortie du fluide.

Les éléments de conduit, ou secteurs, formant le conduit externe, présentent avantageusement une forme trapézoïdale, dont le côté le plus étroit se trouve vers l'intérieur du réacteur, si bien que ces éléments sont faciles à installer dans le réacteur. Ils forment un volume annulaire régulier autour du catalyseur. En cas de détérioration, seul l'élément endommagé est extrait du réacteur et remplacé.

Les éléments adjacents ne sont pas directement jointifs par l'intermédiaire de leurs parois latérales. Ils sont avantageusement reliés l'un à l'autre par l'intermédiaire de moyens d'assemblage mâle dans femelle, sous forme de profils complémentaires formés sur les parois latérales des éléments. Chaque élément de conduit comporte ainsi un profil d'assemblage mâle sur une des ses parois latérales, et un profil d'assemblage femelle sur l'autre. Par un tel système d'assemblage, il ne subsiste avantageusement entre deux éléments adjacents aucun passage vers une zone morte dans laquelle le catalyseur pourrait s'infiltrer, puis y stagner et être détérioré. Les profils mâle et femelle s'étendent et s'enclenchent avantageusement les uns dans les autres de façon continue sur toute la hauteur des éléments. L'assemblage entre les éléments adjacents est solide et il résiste aux variations de température importantes, à la chaleur, ainsi qu'aux pressions exercées dans le réacteur par le fluide. Ainsi, aucune zone morte ne se crée lors du fonctionnement du réacteur. Le rendement de la réaction catalytique est par conséquent amélioré.

Le conduit externe du réacteur selon l'invention est formé d'éléments de conduit similaires, qui s'assemblent les uns aux autres de manière à former une couronne de surface uniforme autour de l'espace contenant le catalyseur. La forme des éléments assure l'absence de zones préférentielles pour le passage du fluide.

De façon classique, la taille des perforations de la paroi avant filtrante, c'est-à-dire la paroi dirigée vers l'intérieur du réacteur, est choisie de manière à ne pas laisser passer les particules de catalyseur, mais à laisser largement se diffuser le fluide à travers la paroi.

La paroi avant filtrante est de préférence réalisée par un profilé de section en V, formant des fentes disposées parallèlement à l'axe du réacteur. La paroi avant présente ainsi avantageusement une surface lisse qui n'endommage pas les particules solides de catalyseur.

Afin d'assurer la meilleure régularité de la surface de contact avec le catalyseur, suivant une caractéristique avantageuse de l'invention, les profils complémentaires mâles et femelles sont disposés à proximité de l'extrémité avant des parois latérales, c'est-à-dire l'extrémité dirigée vers l'intérieur du réacteur, et configurés de sorte à assurer la continuité de la surface interne de la couronne périphérique, y compris au niveau des zones d'assemblage entre les éléments adjacents.

Les profils d'assemblage sont configurés et disposés de manière à prolonger la surface des parois avant filtrantes dans les zones entre les éléments.

Le lit de catalyseur délimité extérieurement par un tel système d'éléments modulaires présente avantageusement une épaisseur radiale constante dans tout l'espace annulaire du réacteur.

Dans des formes de réalisation concrète préférées de l'invention, bien que non limitatives, les moyens d'assemblage sont prévus pour être fixés les uns aux autres par des moyens de vissage ou de cramponnage, qui sont de préférence mis en oeuvre depuis l'intérieur du réacteur lors de l'installation des éléments, et qui sont de préférence encastrés dans la surface de la couronne périphérique, de manière à assurer une surface de contact avec le catalyseur uniforme et sans aspérités. Le vissage ou cramponnage des éléments adjacents les uns avec les autres entraîne une grande résistance mécanique de l'assemblage.

Suivant des modes de réalisation préférés dans la pratique industrielle, l'invention répond en outre aux caractéristiques suivantes, mises en oeuvre séparément ou en chacune de leurs combinaisons techniquement opérantes.

Dans un mode de réalisation préféré de l'invention, les parois latérales comportent, à proximité de leurs extrémités arrières, des butées d'assemblage du type à organe mâle dans organe femelle. Ces butées, qui s'étendent également de préférence de manière continue sur toute la hauteur des éléments, sont emboîtées les unes dans les autres en même temps que les profils d'assemblage mâle/femelle. Elles permettent avantageusement de maintenir un écart constant entre les éléments adjacents sur toute leur profondeur, et ce quelles que soient les conditions de température auxquelles le réacteur peut être soumis. En particulier, même en cas de dilatation non uniforme et à retardement des éléments et du réacteur sous l'effet de la chaleur, ou en cas de déformation des parois des éléments, le jeu entre les éléments adjacents reste le même, et la surface de contact avec le catalyseur reste lisse et continue.

De plus, les éléments ainsi assemblés les uns aux autres forment un ensemble suffisamment rigide pour être auto-porteur. Il n'est pas nécessaire d'utiliser, comme c'est le cas dans les réacteurs de l'art antérieur, des anneaux de maintien des éléments contre la paroi du réacteur. Ceci s'avère particulièrement avantageux car, comme il a été exposé ci-avant, ces anneaux perturbent la circulation de catalyseur dans le lit radial. En outre, sous l'effet de la chaleur ils sont susceptibles de se déformer et de tomber au fond du réacteur, en détériorant les particules de catalyseur et les parois du conduit externe et du collecteur central. Les éléments de conduit selon l'invention forment une couronne périphérique qui reste stable dans le réacteur sans aucune pièce de maintien.

Selon une caractéristique avantageuse de l'invention, les parois latérales des éléments de conduit comportent en outre, sur leur face à l'opposé des moyens d'assemblage, légèrement en arrière de la paroi avant, un renfort latéral rigide en forme de plat. Chaque paroi latérale présente de ce fait une forme qui peut être apparentée à celle d'un T, dont la barre transversale est formée d'une part par le profil d'assemblage et d'autre part par le renfort latéral. Une telle caractéristique confère à l'ensemble formé par les éléments une grande résistance en compression, torsion et flexion.

Selon une caractéristique particulièrement avantageuse de l'invention, les éléments de conduit comportent des moyens de répartition graduelle du débit de fluide dans la direction longitudinale, sur la hauteur des éléments de conduit.

Dans des modes de réalisation préférés de l'invention, ces moyens de répartition comportent une plaque perforée fixée en arrière de la paroi avant filtrante, et dont la densité de perforation varie sur sa hauteur. Cette densité est plus importante dans la partie basse que dans la partie haute du réacteur. La densité de perforation peut tout aussi bien varier par la taille des perforations que par leur nombre.

Une telle caractéristique s'avère tout à fait avantageuse pour assurer un rendement de fonctionnement optimal du réacteur. En effet, le catalyseur se présente sous forme de billes, dont la densité est de façon classique initialement environ égale à 850 kg/m³. Sous l'effet des frottements subis dans les tubes de transfert du catalyseur dans le réacteur, ainsi que dans le réacteur, notamment contre les surfaces des conduits externe et central, au cours du fonctionnement les particules de catalyseur s'usent et leur taille diminue en conséquence. Leur densité peut alors augmenter jusqu'à 1200 à 1400 kg/m³. Ce phénomène est d'autant plus important dans la partie inférieure du réacteur où les particules sont écrasées par le poids du catalyseur au-dessus d'elles. Le fluide traverse plus difficilement le lit de catalyseur, plus dense, dans cette partie inférieure, et il tend de lui-même à se diffuser préférentiellement dans les parties hautes moins denses. Le rendement du réacteur en est diminué car l'ensemble du volume de catalyseur ne travaille pas correctement. De plus, cette partie basse constitue une zone de chauffe importante et le catalyseur et les constituants internes du réacteur y sont plus endommagés.

Le système selon l'invention permet de pallier cet inconvénient, grâce à ses moyens de répartition graduelle du flux de fluide sur la hauteur des éléments. La plus grande densité de perforations de la plaque dans la partie inférieure du réacteur force en effet le fluide à se diriger de façon plus importante dans cette partie du lit radial. La taille et le nombre des perforations sur la hauteur de la plaque sont choisis en fonction de la réaction catalytique particulière mise en oeuvre dans le réacteur, par des calculs à la portée de l'homme du métier pour assurer une utilisation optimale des particules de catalyseur sur toute la hauteur du lit de matériau particulaire.

Dans des modes de réalisation préférés de l'invention, la paroi avant filtrante est supportée en arrière par des renforts annulaires parallèles. Un peigne rigide longitudinal est disposé perpendiculairement en arrière de cette paroi, sensiblement en son milieu, entre les renforts. Ce peigne renforce avantageusement la résistance mécanique de la paroi filtrante, tout en ne générant aucune perturbation du flux de fluide. Il est de préférence soudé aux renforts en haut et en bas des éléments de manière à conférer plus de rigidité et de solidité à la paroi. Ses dents s'insèrent entre les renforts sur toute la hauteur des éléments.

La plaque perforée de répartition du flux gazeux est avantageusement disposée en appui contre les renforts annulaires supportant la paroi avant filtrante, et soudée aux renforts latéraux des parois latérales.

Selon une caractéristique avantageuse de l'invention, le système est conçu de manière à permettre une installation facile des éléments de conduit à l'intérieur du réacteur. A cet effet, il comporte un élément de conduit dit de tête, destiné à être installé en premier dans le réacteur, et un élément de conduit dit de jonction, destiné à être installé en dernier et à fermer la couronne formée dans le réacteur par les éléments successivement installés. Ces éléments de tête et de jonction présentent des configurations spécifiques. Leur forme générale et leurs parois avants et arrières sont similaires à celles des autres éléments de conduit. Ils en diffèrent par leurs parois latérales.

Dans des modes de réalisation préférés de l'invention, l'élément de conduit creux de tête est pourvu non pas sur une, mais sur chacune de ses parois latérales d'un organe d'assemblage femelle, et également de préférence d'une butée d'assemblage femelle. Il ne comporte pas d'organe d'assemblage mâle. Cet élément facilite le montage ultérieur de l'élément de jonction en fin de boucle.

L'élément de jonction est de préférence dépourvu sur une paroi latérale de profil d'assemblage femelle. Sur son autre paroi latérale, il comporte de façon normale un profil d'assemblage mâle destiné à s'assembler avec le profil femelle de l'élément adjacent installé en dernier lieu.

Sur sa paroi latérale dépourvue de profil femelle, l'élément de jonction comporte avantageusement un épaulement pour recevoir un couvre-joint ajustable de même forme que les profils d'assemblage mâles. Ce couvre-joint se dispose de manière à recouvrir le profil d'assemblage femelle de l'élément adjacent, qui est de préférence l'élément de tête de la couronne, et à assurer d'une part l'étanchéité au catalyseur et d'autre part la continuité de la surface interne de la couronne, entre cette paroi latérale et cet élément adjacent.

L'élément de jonction est de préférence de plus petite largeur que les autres éléments de conduit. Sa taille est ajustée de façon à couvrir l'espace annulaire entre les deux éléments qui lui sont adjacents.

Ce secteur particulier, qui est l'élément destiné à être installé en dernier dans le réacteur, assure la fermeture de la couronne d'éléments. D'un côté, il est assemblé à l'élément installé en dernier lieu par son profil d'assemblage mâle. De l'autre côté, il reçoit le couvre-joint ajustable qui se fixe au profil femelle restant libre de l'élément de conduit de tête.

La mise en place de la couronne d'éléments dans le réacteur est ainsi facile à mettre en oeuvre ; elle assure la continuité de la surface interne de la couronne périphérique et l'étanchéité aux particules de catalyseur sur toute cette surface. Il est à retenir ici que l'invention porte aussi sur un procédé de construction de l'enveloppe externe du lit catalytique dans un réacteur à flux radial par assemblage de proche en proche d'éléments de conduits successifs tels que réalisés conformément à l'invention, qui sont insérés axialement dans le réacteur l'un après l'autre. On comprend aussi que, par comparaison avec les réalisations de l'art antérieur en la matière, le besoin d'une fermeture complémentaire est limité à un seul des interfaces entre éléments adjacents. On évite aussi le besoin d'un ceinturage externe de l'ensemble, dans la mesure où les différents éléments sont retenus l'un sur l'autre de toute possibilité de déplacement radial, ce qui ajoute à la solidité de l'ensemble une fois monté.

Les différents éléments de conduit peuvent présenter une paroi arrière pleine ou une paroi arrière filtrante, en fonction des besoins spécifiques. Le réacteur selon l'invention permet également avantageusement de se dispenser d'une telle paroi arrière, puisque la rigidité de la couronne périphérique obtenue par les ceinturages interne et externe formés par les profils et butées d'assemblage est suffisante pour assurer la résistance mécanique même en l'absence de paroi arrière rigidifiante.

Les parois latérales des éléments peuvent être pleines ou ajourées de manière à laisser circuler le fluide d'un élément de conduit à l'autre.

Ces caractéristiques permettent notamment une bonne répartition radiale du flux de fluide dans le conduit externe.

En partie inférieure du réacteur, toujours en fonction des besoins, les extrémités longitudinales des éléments de conduit peuvent être ouvertes ou fermées. En partie supérieure, les éléments sont ouverts pour laisser entrer le fluide. La taille de l'ouverture peut varier en fonction de la réaction. L'ouverture peut être délimitée par des plaques d'étanchéité qui recouvrent chacune partiellement un élément de conduit, en chevauchant les éléments qui lui sont adjacents. Des couvre-joints sont alors avantageusement prévus pour recouvrir les jeux entre les plaques adjacentes.

L'invention sera maintenant plus complètement décrite dans le cadre de caractéristiques préférées et de leurs avantages, en faisant référence aux figures 1 à 6 dans lesquelles :
- la figure 1 représente un réacteur selon l'invention en vue en coupe selon un plan transversal ;
- la figure 2 illustre un élément de conduit selon l'invention en coupe selon un plan transversal ;
- la figure 3 montre une vue en coupe selon un plan transversal d'éléments de conduit assemblés les uns aux autres, comprenant l'élément de jonction et l'élément de tête ;
- la figure 4 représente une vue en perspective et en coupe partielle d'un élément de conduit selon l'invention ;
- la figure 5 montre en vue en perspective la partie supérieure d'un élément de conduit selon l'invention ;
- et la figure 6 montre en vue en coupe selon un plan transversal l'élément de conduit de tête selon l'invention.

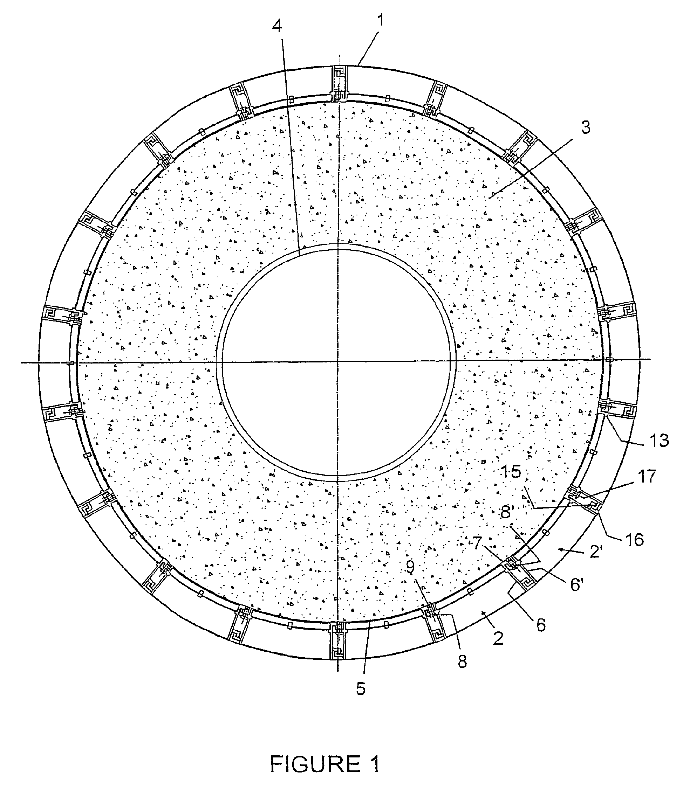

Le réacteur équipé du système selon l'invention est présenté, en vue en coupe selon un plan radial, sur la figure 1. Ses éléments constitutifs sont formés en matière métallique.

Il comporte une cuve cylindrique 1. Dans cette cuve, en appui contre sa paroi interne, sont disposés des éléments de conduit creux 2.

Les éléments de conduit 2 présentent une forme générale trapézoïdale. Ils sont disposés les uns à côté des autres, parallèlement à l'axe du réacteur, de manière occuper chacun un secteur annulaire en périphérie du réacteur.

La couronne périphérique formée par les éléments de conduit 2 délimite extérieurement un espace contenant un lit radial de particules de catalyseur 3.

Au centre du réacteur, au milieu du lit radial, est disposé un collecteur central 4, sous forme d'un panier cylindrique à paroi filtrante.

Le fluide à convertir est admis dans le conduit externe du réacteur, formé par les éléments de conduit 2 assemblés les uns aux autres, par des moyens d'entrée de fluide classiques, qui ne sont pas représentés sur la figure. L'entrée du fluide se fait, selon les cas, par le haut ou par le bas du réacteur, le plus généralement par le haut. Le conduit externe distribue radialement le fluide dans le lit de particules 3, dans lequel il se diffuse radialement jusqu'à parvenir au collecteur central 4, à l'état converti. Le collecteur central 4 est relié à des moyens de sortie de fluide, également classiques. Ces moyens sont situés à l'extrémité longitudinale du réacteur opposée à l'extrémité d'entrée du fluide.

Chacun des éléments de conduit 2 comporte une paroi avant filtrante 5, ou crépine. Le maillage de cette paroi est choisi de manière à laisser largement traverser le fluide, mais à bloquer les particules de catalyseur de manière à les maintenir dans l'espace 3. Cette paroi avant, dirigée vers l'axe du réacteur, est de préférence constituée d'un profilé de section en V, la partie la plus étroite du V étant dirigée vers la paroi de la cuve 1. Pour le passage du fluide le profilé forme des fentes parallèles à l'axe du réacteur.

La paroi avant 5 est soutenue par des parois latérales 6, qui peuvent être des plaques soudées à la paroi avant, ou être constituées d'une seule et même pièce avec cette paroi avant. Les parois latérales 6 sont disposées radialement par rapport au réacteur.

Les parois latérales 6, 6' des éléments de conduit adjacents forment des profils d'assemblage complémentaires mâle dans femelle. Ainsi, une paroi latérale 6 d'un premier élément de conduit forme un profil mâle 7, qui est emboîté dans un profil femelle 8' formé sur la paroi latérale 6' d'un élément de conduit adjacent.

Les profils d'assemblage sont soudés aux parois latérales respectives qui les portent. Ils s'étendent de façon continue sur toute la hauteur des éléments.

Les profils complémentaires 7 et 8' emboîtés l'un dans l'autre sont fixés l'un à l'autre au moyen de vis ou goupilles 9, qui sont insérées lors de l'assemblage depuis l'intérieur du réacteur, à intervalles réguliers sur la hauteur des éléments, notamment tous les 1 à 2 m. Les vis ou goupilles 9 s'encastrent entièrement dans les profils de manière à ne pas dépasser à l'intérieur du lit radial de particules 3.

Les profils d'assemblage 7, 8 sont disposés près des extrémités avant, c'est-à-dire vers l'axe du réacteur, des parois latérales, et de telle sorte que la couronne formée des éléments de conduit 2 présente une surface interne, de contact avec le catalyseur, régulière sur toute la périphérie du réacteur. L'assemblage des éléments de conduit adjacents s'effectue donc sans rupture de la continuité de surface avec les parois avant filtrantes 5 des éléments.

Les éléments de conduit 2 assemblés les uns aux autres forment une couronne annulaire uniforme et régulière autour du lit de catalyseur 3, qui est maintenu dans un volume annulaire bien délimité. Comme on peut le voir sur la figure, il n'y a dans le réacteur aucune zone morte dans laquelle le catalyseur pourrait s'insérer et stagner.

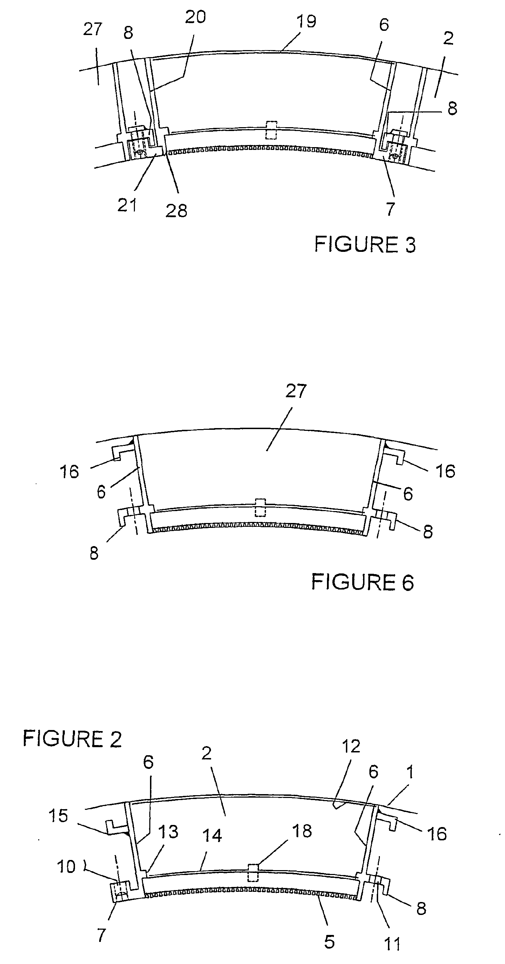

Un élément de conduit 2 est représenté de façon plus détaillée sur la figure 2, en appui contre la paroi interne de la cuve 1.

Chacune des parois latérales 6 porte un profil d'assemblage, d'un côté mâle 7, et du côté opposé femelle 8, chacun de ces profils étant destiné à s'emboîter avec un profil complémentaire formé sur l'élément adjacent. Le profil mâle 7 prolonge parfaitement la paroi avant filtrante 5, de manière à assurer la continuité de surface au niveau de l'assemblage entre deux éléments.

Le profil mâle 7 comporte, à intervalles réguliers sur sa hauteur, des orifices traversants 10 pour l'insertion des vis ou goupilles de fixation 9. Le profil femelle 8 comporte, à mêmes intervalles, des cavités 11 de réception de ces vis ou goupilles, qui peuvent être filetées selon les modes de réalisation.

Dans le mode de réalisation représenté sur cette figure, l'élément 2 comporte également une paroi arrière 12, qui est en appui contre la surface de la cuve 1. Cette paroi peut être soudée aux parois latérales, ou être formée en monobloc avec ces dernières.

Sur chaque paroi latérale 6 est en outre fixé, de préférence soudé, un plat de renfort latéral 13. Le plat 13 est fixé sur la face à l'opposé du profil d'assemblage, légèrement en arrière de la paroi avant 5. Les plats latéraux 13 rigidifient les parois latérales, et leur confèrent une meilleure résistance mécanique aux efforts radiaux exercés dans le réacteur, par le catalyseur et par le fluide.

Les plats latéraux 13 servent en outre à supporter des renforts 22 et une plaque perforée 14 disposés en arrière de la paroi avant 5, qui seront décrits plus loin dans la description.

Les parois latérales 6 des éléments adjacents comportent, sur leur face externe et à proximité de leurs extrémités arrières, des butées complémentaires d'assemblage, sous forme d'une butée mâle 15 et d'une butée femelle 16. Les butées de deux éléments adjacents s'emboîtent l'une dans l'autre lors de l'assemblage. La butée mâle 15 est disposée en arrière du profil d'assemblage mâle 7, et la butée femelle 16 est disposée en arrière du profil d'assemblage femelle 8, de manière à faciliter le montage des éléments les uns par rapport aux autres.

Ces butées complémentaires, disposées vers l'arrière de chaque élément, près de la paroi de la cuve 1, maintiennent un espacement régulier et constant entre les éléments adjacents et cela même en cas de déformation ou de dilatation inégales et/ou décalées dans le temps des éléments 2 et de la cuve 1.

Ces profils et butées d'assemblage créent respectivement un ceinturage interne et un ceinturage externe des éléments 2 installés dans le réacteur. Ces ceinturages suffisent à maintenir les éléments 2 en place lors du fonctionnement du réacteur, en formant un ensemble dit auto-porteur. Il n'est ainsi avantageusement pas nécessaire d'avoir recours à des pièces supplémentaires de maintien des éléments de conduit, tels que des anneaux de maintien, qui seraient perturbateurs de la circulation de catalyseur dans l'espace 3. En outre, les efforts radiaux exercés sur les éléments de conduit 2 sont entièrement supportés par ces ceinturages, et aucun effort radial dû au poids de catalyseur n'est transmis jusqu'à la paroi du réacteur.

Dans des modes de réalisation de l'invention, les éléments de conduit sont dépourvus de paroi arrière, si bien que le fluide admis par le haut du réacteur est uniformément réparti dans tout le volume circulaire du conduit externe.

Les parois latérales 6 des éléments 2 peuvent être pleines, ou ajourées de manière à laisser circuler le fluide entre les différents éléments de conduit 2.

Ces caractéristiques permettent notamment une bonne répartition radiale du fluide dans le conduit externe, avant son admission dans le lit de particules.

Un peigne rigide longitudinal 18 est disposé en arrière de la paroi avant 5, perpendiculairement à cette dernière et de préférence de manière à en occuper sensiblement toute la hauteur. Ce peigne 18 renforce la résistance mécanique de la paroi 5.

Le système comporte deux éléments de conduit de configuration particulière : un élément de conduit de tête 27, destiné à être installé en premier dans le réacteur, et un élément de jonction 19, destiné à y être installé en dernier. Ces éléments sont similaires aux autres éléments de conduit 2 décrits ci-avant quant à leur forme générale, leurs parois avants 5 et arrières 12. Ils en diffèrent par les profils portés par leurs parois latérales 6.

L'élément de tête 27 est représenté sur la figure 6. Ses parois latérales 6 sont toutes deux munies d'un profil d'assemblage femelle 8 et d'une butée d'assemblage femelle 16. Cet élément de tête 27 facilite le montage ultérieur de l'élément de jonction 19.

Pour le montage, l'élément de conduit de tête 27 est installé en premier, et les éléments de conduit 2 classiques sont ensuite installés les uns après les autres dans le réacteur. Ils y sont facilement insérés longitudinalement, depuis le haut, au milieu du réacteur. Puis ils sont décalés radialement vers sa périphérie, pour leur mise en place contre la paroi interne de la cuve 1. Les profils d'assemblage mâles 7 et les butées d'assemblage mâles 15 sont toujours emboîtés respectivement sur les profils d'assemblage femelles 8' et les butées d'assemblage femelles 16' de l'élément adjacent déjà en place. Chaque nouvel élément 2' installé est fixé, à l'intérieur du réacteur, au moyen de vis ou goupilles 9, au dernier élément 2 installé. Une couronne périphérique est ainsi formée par assemblage des secteurs individuels.

Afin d'assurer la jonction entre le premier et le dernier élément installés, le réacteur comporte un élément de jonction 19, également sous forme d'un élément de conduit creux à paroi avant filtrante 5, qui est montré sur la figure 3. Sur cette figure, les butées d'assemblage 15 et 16 n'ont pas été représentées.

Cet élément est similaire aux éléments 2 décrits ci-avant, du moins pour ses parois avant et arrière et une de ses parois latérales 6, portant le profil d'assemblage mâle 7. Sa taille peut être différente ; elle est adaptée en fonction de la configuration particulière du réacteur.

Sa paroi latérale opposée 20 est par contre dépourvue de profil d'assemblage femelle, afin de permettre son installation en dernier lieu dans la couronne, par insertion longitudinale dans le réacteur, puis déplacement radial du centre du réacteur vers sa périphérie. A la place du profil d'assemblage femelle, l'élément 19 comporte, au niveau de sa paroi avant 5, un épaulement 28 pour recevoir un couvre-joint ajustable 21 de même forme que les profils d'assemblage mâles 7. Ce couvre-joint 21 recouvre le profil d'assemblage femelle de l'élément adjacent, qui est l'élément de tête 27, de manière à assurer l'étanchéité aux particules de catalyseur, en même temps que la continuité de la surface interne de la couronne à cette jonction.

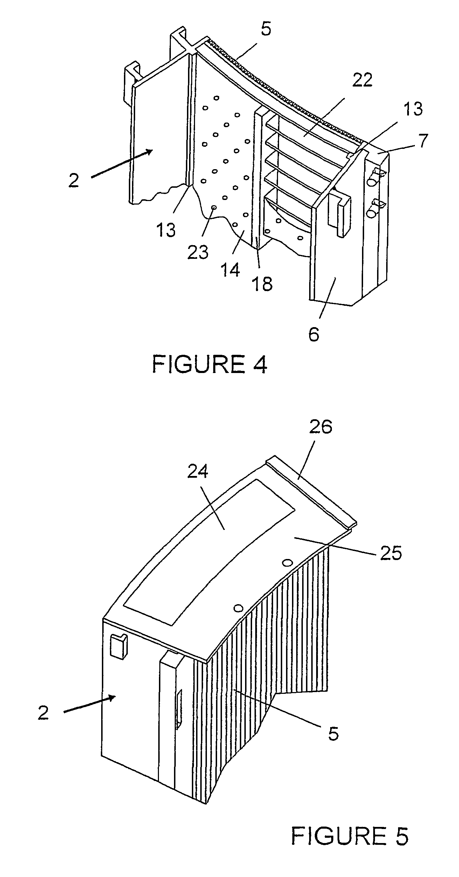

Pour tous les éléments de conduit 2, 2', l'élément de tête 27 et l'élément de jonction 19, la paroi avant filtrante 5 est supportée en arrière par des renforts annulaires parallèles 22, comme on peut le voir sur la figure 4. Ces renforts sont supportés latéralement par les plats latéraux 13. Le peigne 18 est disposé de manière à ce que ses dents s'insèrent entre les renforts 22.

En arrière des renforts 22, une plaque perforée 14 est fixée aux plats latéraux 13. Cette plaque 14 est parallèle à la paroi avant 5, sur toute la hauteur de cette dernière. La densité de ses perforations 23 diminue graduellement du bas vers le haut du réacteur, de manière à forcer le flux de fluide préférentiellement dans la partie inférieure du réacteur. Ceci permet d'assurer la circulation du fluide même dans la partie inférieure du lit de catalyseur à forte densité, et par conséquent d'obtenir un rendement optimal de la réaction catalytique.

Au niveau de son extrémité supérieure, chaque élément de conduit 2 comporte une ouverture 24 pour l'entrée du fluide, comme illustré sur la figure 5. La taille de cette ouverture 24 est réglée en fonction des besoins spécifiques de la réaction. Une plaque de fermeture 25 obture l'élément de conduit autour de l'ouverture 24. Cette plaque 25 déborde sur l'élément de conduit adjacent, de manière à assurer l'étanchéité au fluide. Un couvre-joint 26 assure l'étanchéité entre deux plaques 25 adjacentes.

En partie inférieure, toujours en fonction des besoins particuliers de la réaction catalytique, chaque élément de conduit 2 peut être fermé par une plaque qui peut être pleine, ou filtrante au centre de manière à laisser circuler le fluide vers la partie inférieure du réacteur. Cette plaque peut être soudée ou vissée sur l'anneau support du réacteur.

La description qui précède explique clairement comment l'invention permet d'atteindre les objectifs qu'elle s'est fixés. En particulier, elle fournit un système de rétention externe d'un lit de catalyseur dans un réacteur catalytique à flux radial, formé d'éléments de conduit creux distincts faciles à installer et à remplacer dans le réacteur, qui s'assemblent les uns aux autres de manière à assurer une bonne résistance mécanique aux efforts radiaux et à la température, une surface de contact régulière avec le catalyseur, sans zones mortes, et une épaisseur radiale uniforme du lit de particules de catalyseur. Le système selon l'invention ne nécessite pas d'éléments perturbateurs de la circulation du catalyseur, et le réacteur équipé d'un tel système présente un rendement catalytique important.

## Revendications

1. Système de rétention externe d'un lit de catalyseur dans un réacteur catalytique à flux radial, comportant une pluralité d'éléments de conduit creux longitudinaux (2) régulièrement répartis en couronne périphérique autour d'un espace central (3) contenant le lit de catalyseur et présentant une paroi avant (5) filtrante à l'égard du catalyseur, pour l'admission radiale d'un fluide à traiter dans ledit lit de catalyseur (3), **caractérisé en ce que** chacun desdits éléments (2) est limité latéralement par deux parois latérales (6) s'orientant radialement dans le réacteur (1) et comportant des moyens d'assemblage à organe mâle dans organe femelle (7, 8) avec les éléments respectivement adjacents (2').

2. Système selon la revendication 1, **caractérisé en ce que** lesdits moyens d'assemblage sont des profils complémentaires (7, 8) disposés à proximité de l'extrémité avant des parois latérales (6) et configurés de sorte à assurer la continuité de la surface interne de ladite couronne périphérique.

3. Système selon la revendication 1 ou 2, **caractérisé en ce que** lesdites parois latérales (6) sont pleines, ou ajourées de manière à laisser circuler ledit fluide d'un élément de conduit (2) à l'autre.

4. Système selon la revendication 1 à 3, **caractérisé en ce que** les parois latérales (6) comportent à proximité de leurs extrémités arrières des butées d'assemblage à organe mâle dans organe femelle (15, 16).

5. Système selon l'une quelconque des revendications 1 à 4, **caractérisé en ce que** les moyens d'assemblage (7, 8) sont fixés les uns aux autres par des moyens de vissage (9), de préférence encastrés dans la surface de ladite couronne périphérique.

6. Système selon l'une quelconque des revendications 1 à 5, **caractérisé en ce que** lesdites parois latérales (6) comportent, à l'opposé desdits moyens d'assemblage (7, 8), en arrière de ladite paroi avant (5), un renfort latéral (13).

7. Système selon l'une quelconque des revendications 1 à 6, **caractérisé en ce qu'**il comporte des moyens de répartition graduelle du débit gazeux dans la direction longitudinale.

8. Système selon la revendication 7, **caractérisé en ce que** lesdits moyens de répartition comportent une plaque perforée (14) fixée en arrière de la paroi avant filtrante (5), et dont la densité de perforation varie sur sa hauteur.

9. Système selon l'une quelconque des revendications 1 à 8, **caractérisé en ce que** ladite paroi avant filtrante (5) est supportée en arrière par des renforts annulaires parallèles (22), et **en ce qu'**un peigne rigide longitudinal (18) est disposé perpendiculairement en arrière de ladite paroi (5), sensiblement en son milieu, entre lesdits renforts (22).

10. Système selon l'une quelconque des revendications 1 à 9, **caractérisé en ce qu'**il comporte un élément de conduit creux de tête (27) destiné à être installé le premier dans le réacteur, qui est pourvu d'un organe d'assemblage femelle (8) sur chacune de ses parois latérales (6).

11. Système selon l'une quelconque des revendications 1 à 10, **caractérisé en ce qu'**il comporte un élément de conduit creux (19) de jonction de la couronne, qui est dépourvu sur une paroi latérale (20) de profil d'assemblage femelle et qui comporte sur ladite paroi latérale (20) un épaulement (28) pour recevoir un couvre-joint ajustable (21) de même forme qu'un organe d'assemblage mâle (7), ledit couvre-joint se disposant de manière à recouvrir le profil d'assemblage femelle (8) de l'élément adjacent (27) et à assurer l'étanchéité au catalyseur et la continuité de la surface interne de la couronne entre ladite paroi (20) et l'élément adjacent (27).

12. Système selon l'une quelconque des revendications 1 à 11, **caractérisé en ce que** lesdits éléments de conduit (2) comportent une paroi arrière (12) filtrante ou une paroi arrière (12) pleine.

## Claims

1. A system for the external retention of a bed of catalyst in a radial-flow catalytic reactor, comprising a plurality of longitudinal hollow conduit elements (2) evenly distributed in a peripheral annulus around a central space (3) containing said catalyst bed, each said element having a front wall (5) that is filtering in respect of the catalyst, for radially admitting a process fluid into said bed of catalyst (3), **characterized in that** each said element (2) is laterally bounded by two lateral walls (6) directed radially in the reactor (1) which comprise cooperating assembly means of the male-in-female member type (7, 8) for assembling it with the respectively adjacent elements (2').

2. The system as claimed in claim 1, **characterized in that** said assembly means are made of complementary longitudinal profiles (7, 8) positioned near the front end of said lateral walls (6) and configured for ensuring continuity of the internal surface of said peripheral annulus.

3. The system as claimed in claim 1 or 2, **characterized in that** said lateral walls (6) are solid, or are holed so as to allow said fluid to circulate from one conduit element (2) to another.

4. The system as claimed in claims 1 to 3, **characterized in that** said lateral walls (6) comprise assembly stopping means of the male-in-female member type (15, 16) that are positioned near the rear end of said lateral walls.

5. The system as claimed in any one of claims 1 to 4, **characterized in that** said assembly means (7, 8) are fixed together by screw-fastening means (9), which are preferably set into the surface of said peripheral annulus.

6. The system as claimed in any one of claims 1 to 5, **characterized in that** said lateral walls (6) comprise a lateral reinforcement (13), positioned on the opposite side to said assembly means (7, 8) backwards from said front wall (5).

7. The system as claimed in any one of claims 1 to 6, **characterized in that** it comprises distributing means for gradually distributing the gaseous stream along the longitudinal direction.

8. The system as claimed in claim 7, **characterized in that** said distributing means comprise a perforated plate (14) fixed set back from said catalyst filtering front wall (5) and showing a perforation density which varies along its height.

9. The system as claimed in any one of claims 1 to 8, **characterized in that** said catalyst filtering front wall (5) is supported at the rear by parallel annular reinforcements (22), and **in that** a longitudinal rigid comb (18) is positioned at right angles set back from said wall (5), substantially at the middle thereof, between said reinforcements (22).

10. The system as claimed in any one of claims 1 to 9, **characterized in that** it comprises a lead hollow conduit element (27), intended to be the first one installed in the reactor, and which is provided with a female assembly member (8) on each of its lateral walls (6).

11. The system as claimed in any one of claims 1 to 10, **characterized in that** it comprises an annulus joining hollow conduit element (19) which, on one lateral wall (20), is not provided with a female assembly profile and which on said lateral wall (20) comprises a shoulder (28) to accept an adjustable cover strip (21) of the same shape as a male assembly member (7), said cover strip being positioned in such a way as to cover the female assembly profile (8) of the adjacent element (27) and to seal the internal surface of the annulus against the catalyst and to provide it with continuity between said wall (20) and the adjacent element (27).

12. The system as claimed in any one of claims 1 to 11, **characterized in that** said conduit elements (2) comprise a filtering rear wall (12) or a solid rear wall (12).

## Patentansprüche

1. Externes Rückhaltesystem eines Katalysatorbettes in einem katalytischen Radialstromreaktor, der eine Vielzahl von längs verlaufenden hohlen Leitungselementen (2) aufweist, die gleichmäßig als Umfangskranz um einen Mittelraum (3) verteilt sind, der das Katalysatorbett enthält und die eine vordere Wand (5) aufweisen, die gegenüber dem Katalysator eine Filterfunktion zum radialen Einlassen eines zu behandelnden Mediums in das Katalysatorbett (3) erfüllt, **dadurch gekennzeichnet, dass** jedes der Elemente (2) seitlich von zwei Seitenwänden (6) begrenzt ist, die in dem Reaktor (1) radial ausgerichtet sind und die Verbindungsmittel mit einem eingreifenden und einem aufnehmenden Element (7, 8) mit den jeweils angrenzenden Elementen (2') aufweisen.

2. System nach Anspruch 1, **dadurch gekennzeichnet, dass** es sich bei den Verbindungsmitteln um zueinander komplementäre Profile (7, 8) handelt, die in der Nähe des vorderen Endes der Seitenwände (6) angeordnet und so gestaltet sind, dass sie die Durchgängigkeit der Innenfläche des Umfangskranzes sicherstellen.

3. System nach Anspruch 1 oder 2, **dadurch gekennzeichnet, dass** die Seitenwände (6) massiv oder in der Weise durchbrochen sind, dass sie das Medium von einem Leitungselement (2) zum anderen zirkulieren lassen.

4. System nach Anspruch 1 bis 3, **dadurch gekennzeichnet, dass** die Seitenwände (6) in der Nähe ihrer hinteren Enden Verbindungsanschläge mit einem eingreifenden in einem aufnehmenden Element (15, 16) umfassen

5. System nach einem der Ansprüche 1 bis 4, **dadurch gekennzeichnet, dass** die Verbindungsmittel (7, 8) aneinander durch Verschraubungsmittel (9) befestig sind, die vorzugsweise in die Oberfläche des Umfangskranzes eingelassen sind.

6. System nach einem der Ansprüche 1 bis 5, **dadurch gekennzeichnet, dass** die Seitenwände (6) den Verbindungsmitteln (7, 8) gegenüberliegend hinter der vorderen Wand (5) eine seitliche Verstärkung (13) aufweisen.

7. System nach einem der Ansprüche 1 bis 6, **dadurch gekennzeichnet, dass** es Mittel zur graduellen Verteilung des Gasdurchsatzes in Längsrichtung aufweist.

8. System nach Anspruch 7, **dadurch gekennzeichnet, dass** die Verteilungsmittel eine Lochplatte (14) aufweisen, die hinter der vorderen Filterwand (5) befestigt ist und deren Lochungsdichte sich auf ihrer Höhe verändert.

9. System nach einem der Ansprüche 1 bis 8, **dadurch gekennzeichnet, dass** die vordere Filterwand (5) hinten durch parallele ringförmige Verstärkungen (22) gehalten wird und dadurch, dass ein starrer, in Längsrichtung verlaufender Kamm (18) senkrecht hinter der Wand (5) angeordnet ist, im Wesentlichen in ihrer Mitte zwischen den Verstärkungen (22).

10. System nach einem der Ansprüche 1 bis 9, **dadurch gekennzeichnet, dass** es ein hohles Kopf-Leitungselement (27) aufweist, das dazu bestimmt ist, als erstes in den Reaktor eingebaut zu werden und das an jeder seiner Seitenwände (6) mit einem aufnehmenden Verbindungselement (8) versehen ist.

11. System nach einem der Ansprüche 1 bis 10, **dadurch gekennzeichnet, dass** es ein hohles Leitungselement (19) zum Zusammenfügen des Kranzes aufweist, dem an einer Seitenwand (20) das aufnehmende Verbindungsprofil fehlt und das an dieser Seitenwand (20) einen Absatz (28) aufweist, um eine einstellbare Fugenabdeckung (21) von derselben Form wie ein eingreifendes Verbindungselement (7) aufzunehmen, wobei die Fugenabdeckung so angeordnet ist, dass sie das aufnehmende Verbindungsprofil (8) des angrenzenden Elements (27) aufnimmt und die Dichtheit des Katalysators und die Durchgängigkeit der Innenfläche des Kranzes zwischen der Wand (20) und dem angrenzenden Element (27) sicherstellt.

12. System nach einem der Ansprüche 1 bis 11, **dadurch gekennzeichnet, dass** die Leitungselemente (2) eine filternde Rückwand (12) oder eine massive Rückwand (12) aufweisen.
